# FASCICULE DE BREVET EUROPEEN

(11) **EP 1 875 439 B1**
(45) Date de publication et mention de la délivrance du brevet: **20.08.2008**
(21) Numéro de dépôt: 06754777.8
(22) Date de dépôt: 20.04.2006
(51) Int. Cl.: G06T 11/00, G06T 1/00, G06T 1/60

(54) **DISPOSITIF DE GENERATION GRAPHIQUE COMPORTANT DES MOYENS DE SURVEILLANCE DE SON FONCTIONNEMENT**
VORRICHTUNG ZUR ERZEUGUNG VON GRAPHIKEN MIT MITTELN ZUR VORGANGSÜBERWACHUNG
DEVICE FOR GRAPHIC GENERATION COMPRISING MEANS FOR MONITORING THE OPERATION THEREOF

(30) Priorité: 26.04.2005 FR 0504195
(43) Date de publication de la demande: 09.01.2008
(73) Titulaire: THALES, 92200 Neuilly sur Seine (FR)
(72) Inventeur: CAPIRCIO, Patrice, 33320 Le Taillan Medoc (FR); FILLIATRE, Eric, 33700 Merignac (FR)
(74) Mandataire: Bréda, Jean-Marc
(86) Numéro de dépôt international: PCT/EP2006/061720
(87) Numéro de publication internationale: WO 2006/114388

(56) Documents cités:
- WO-A-00/56008
- US-A1- 2002 080 143
- US-A1- 2004 162 989

## Description

Le domaine de l'invention concerne la sûreté de fonctionnement des systèmes d'Interface Homme/Machine affichant des informations sous forme de graphismes ou de symbologie.

Le domaine d'application est plus particulièrement celui des systèmes de visualisation de cockpit embarqués sur aéronefs. Ce type de système est dessiné à afficher des informations critiques pour le pilotage ou la navigation de l'aéronef. L'affichage erroné de certains paramètres peut conduire à des situations catastrophiques pour la sûreté de fonctionnement de l'appareil. L'intégrité de base ou la fiabilité de la chaîne de visualisation n'étant pas suffisantes pour garantir les exigences de sûreté, il est nécessaire de mettre en oeuvre des mécanismes de surveillance spécifiques destinés à détecter les éventuelles erreurs d'affichage.

Bien entendu, compte-tenu des contraintes de sécurité propres à ce domaine, le domaine privilégié de ce type d'application est l'aéronautique. L'invention peut, cependant, s'appliquer à tout système d'Interface Homme/Machine nécessitant un haut degré de sécurité et comportant des visualisations, tels que les systèmes employés pour le transport ferroviaire ou les systèmes centralisés de contrôle et de commande pour des applications civiles ou militaires.

II existe plusieurs solutions pour assurer la sécurisation d'une chaîne de visualisation.

Historiquement, la sécurisation d'une chaîne de visualisation embarquée est principalement assurée par un mécanisme de rétroaction, encore appelé en terminologie anglo-saxonne « Feedback ».

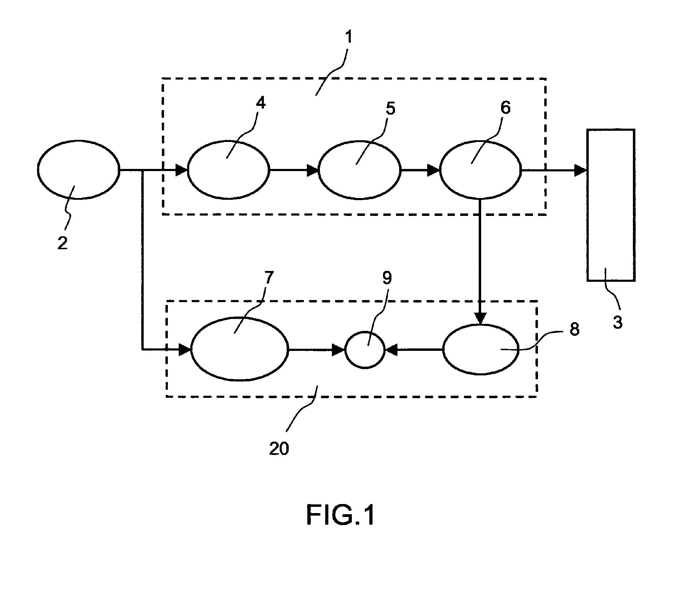

Le principe est illustré en figure 1. Une chaîne de visualisation 1 est disposée entre un ou plusieurs capteurs 2 et un écran de visualisation 3. Elle comprend essentiellement 3 sous-systèmes qui sont :
- Un dispositif d'acquisition 4 des paramètres issus du ou des capteurs 2 que l'on notera paramètres-mesurés ;
- Un dispositif de traitement 5 desdits paramètres ;
- Un dispositif de génération graphique 6 assurant l'interface avec l'écran de visualisation 3.

Le mécanisme de rétroaction comprend également 3 sous-systèmes qui sont :
- Un second dispositif d'acquisition 7 des paramètres issus du ou des capteurs 2, identique au précédent dispositif 4 et fonctionnant en parallèle avec lui ;
- Un dispositif de calcul 8 qui, à partir des données issues du dispositif de génération graphique, recalcule de façon inverse les paramètres d'origine issues des capteurs 2 que l'on notera paramètres-calculés ;
- Un dispositif de surveillance 9 qui assure la comparaison entre les paramètres-mesurés et les paramètres-calculés.

Cette technique de surveillance a un certain nombre d'inconvénients et de limitations :
- Conçue initialement pour assurer l'intégrité des systèmes de visualisation à tube cathodique, cette technique, depuis le passage aux écrans à cristaux liquides dits LCD, ne couvre plus l'intégralité de la chaîne de visualisation, nécessitant la mise de oeuvre de mécanismes de sécurité supplémentaires.
- L'asynchronisme existant entre la chaîne de visualisation et sa surveillance fait qu'une stricte comparaison n'est pas possible, nécessitant d'introduire soit des corrections δ, soit des mécanismes d'inhibition de la surveillance, si la dynamique du paramètre d'entrée est trop importante.
- L'algorithme inverse possède un bruit propre qui ne permet pas une stricte comparaison. La performance de la détection repose donc sur la spécification des corrections δ.
- Cette technique nécessite de pouvoir prélever des informations graphiques de type vecteurs ou sommets pour alimenter la chaîne de surveillance. Ces informations ne sont plus disponibles avec certaines technologies. En effet, il n'est pas possible d'accéder à ce type d'informations avec des composants de type GPU, acronyme anglo-saxon pour Graphics Processing Unit, qui sont couramment utilisés pour réaliser des fonctions graphiques. Elle n'est pas donc pas adaptée aux nouvelles architectures de visualisation. Cette technique n'est, par conséquent, ni générique ni portable vis à vis des technologies de génération graphique de nouvelle génération.
- La charge de calcul nécessaire au calcul inverse est importante.
- Le principe même de l'algorithme inverse rend la solution totalement dédiée à la symbologie affichée et n'est pas générique vis à vis des diverses applications possibles.

Une autre solution consiste à mettre en oeuvre deux voies de Génération Graphique dissemblables notées voie 1 et voie 2 :
- Voie 1 : voie nominale identique à la chaîne de visualisation précédente et générant toute l'image à afficher incluant les symboles critiques et non critiques.
- Voie 2 : voie de surveillance générant une image limitée aux symboles critiques. Cette voie est mise en oeuvre de manière dissemblable de la voie nominale 1.

L'objectif de la surveillance est de vérifier que les deux voies ont bien généré la même image pour les symboles critiques. Deux solutions sont mises en oeuvre :
- Mise en oeuvre d'une fonction de comparaison des deux images générée ou
- Superposition sur l'écran des deux images. En cas de différence, la détection sera visuellement effectuée par l'opérateur humain utilisant cet écran.

Cette solution présente les inconvénients suivants :
- Vérification partielle de la chaîne de visualisation, seule la partie Génération Graphique de la chaîne fonctionnelle étant sécurisée.
- Augmentation du coût des équipements par la mise en oeuvre des ressources matérielles et logicielles nécessaires pour la deuxième voie dissemblable.
- Dépendance de la solution vis-à-vis de l'application choisie, cette solution dépendant de la symbologie affichée.
- Complexité et difficulté de mise en oeuvre de la fonction de comparaison des deux images. En effet, les algorithmes graphiques des deux voies étant dissemblables ne généreront pas nécessairement des images comparables au pixel prêt. De plus, l'image pleine de la voie 1 peut posséder des couleurs de fond différentes de celles de la voie 2 de surveillance, ce qui rend très difficile une simple comparaison pixel par pixel.
- Difficulté de mise en évidence de l'effet visuel dans le cas d'une superposition d'image. II faut, en effet, garantir que l'effet visuel soit suffisamment évident pour que l'opérateur puisse détecter facilement l'erreur dans n'importe quelle condition d'observation.

Le but de l'invention est de garantir l'intégrité d'affichage d'une chaîne de visualisation embarquée tout en ne présentant pas les inconvénients précédents. En outre, par rapport aux solutions actuelles décrites ci-dessus, ce nouveau mécanisme de surveillance fournit une solution générique ne dépendant pas du type d'application et des images qui sont visualisées. De plus, cette nouvelle surveillance permet de garantir l'intégrité des nouvelles technologies de visualisation, qu'elles soient basées sur des solutions dites propriétaires, c'est-à-dire développées spécifiquement pour une application donnée ou qu'elles soient basées sur des solutions du commerce dites COTS, acronyme signifiant Component Of The Shelf, le mécanisme de surveillance faisant l'objet de l'invention étant suffisamment générique et portable par rapport à la génération graphique mise en oeuvre. Les composants de type COTS ont généralement une faible pérennité. Il est donc important de développer un dispositif de surveillance qui ne soit pas lié au composant.

Les principes de surveillance selon l'art antérieur sont tous basés sur la surveillance des informations graphiques issues de la chaîne de visualisation et la vérification que ces informations correspondent bien aux paramètres d'entrée. Le coeur de l'invention est de surveiller essentiellement le bon fonctionnement des fonctions de la génération graphique, indépendamment des données qu'elle traite.

L'invention est plus spécifiquement destinée à être mise en oeuvre pour les dispositifs de génération graphique implantés dans des structures d'accueil informatique comportant un CPU, acronyme de Central Processing Unit. Dans ce type d'architecture, la génération graphique n'appartient plus à une application particulière mais fait partie intégrante de la structure d'accueil. Ainsi, on met en oeuvre un mécanisme de surveillance de la génération graphique dans la structure d'accueil elle même. La définition des applications devient donc indépendante de la génération graphique. Afin que les applications puissent mettre en oeuvre, si nécessaire, leur propre surveillance, chaque structure d'accueil offre la possibilité de dialoguer avec une autre structure d'accueil, dialogue appelé encore cross talk.

Plus précisément, l'invention concerne un dispositif de génération graphique de symbologies destinées à un écran de visualisation, ledit dispositif comportant des fonctions de génération d'éléments de symbologies et des moyens de surveillance de son bon fonctionnement, caractérisé en ce que les dits moyens de surveillance comportent, au moins :
- Des premiers moyens permettant d'interdire l'utilisation de certaines desdites fonctions de génération d'éléments de symbologies ;
- Des seconds moyens permettant de générer et de contrôler des micro-images dédiées à la surveillance desdites fonctions.

Avantageusement, les fonctions interdites sont des fonctions susceptibles de générer des éléments de symboles récurrents ou des macro-fonctions comprenant une pluralité de fonctions élémentaires de génération d'éléments de symbologies.

Avantageusement, le dispositif comporte une mémoire comportant une première zone destinée à la mémorisation de la symbologie et une seconde zone, les micro-images étant générées dans cette seconde zone.

Avantageusement, le dispositif comporte une mémoire comportant une première zone destinée à la mémorisation de la symbologie, les seconds moyens de surveillance permettant de générer des micro-images dans cette première zone pendant une durée courte comparée au temps de rafraîchissement de la symbologie sur l'écran de visualisation.

De plus, le dispositif comporte, en outre, des troisièmes moyens de surveillance permettant de surveiller certaines variables d'état internes au dispositif de génération graphique, lesdits troisièmes moyens comportant des moyens de calcul desdites variables d'état internes indépendants de ceux du dispositif de génération graphique.

L'invention concerne également un procédé de surveillance du bon fonctionnement d'un dispositif de génération graphique comportant une mémoire comprenant une première zone destinée à la mémorisation de la symbologie, les micro-images étant générées dans cette première zone, ledit procédé comportant au moins les étapes suivantes :
- Tracé de la micro-image dans la première zone ;
- Calcul d'une signature mathématique de la dite micro-image ;
- Comparaison de la signature calculée avec une signature attendue ;
- Effacement de la micro-image ;
- Tracé de l'image opérationnelle.

En outre, le dispositif peut être du type GPU, acronyme de Graphics Processing Unit, les fonctions de génération graphique et les moyens de surveillance sont intégrés à une structure d'accueil comportant un CPU, acronyme de Central Processing Unit, les fonctions de génération d'éléments de symbologies sont écrite en langage OpenGL, acronyme de Open Graphics Langage.

Avantageusement, l'écran de visualisation est du type LCD, acronyme de Liquid Crystal Display et la symbologie est de type aéronautique et représente des symboles utiles au moins pour le pilotage et la navigation aérienne.

L'invention sera mieux comprise et d'autres avantages apparaîtront à la lecture de la description qui va suivre donnée à titre non limitatif et grâce aux figures annexées parmi lesquelles :
- La figure 1 représente une chaîne de visualisation comportant un dispositif de sécurisation selon l'art antérieur ;
- La figure 2 représente le schéma de principe d'un dispositif de surveillance selon l'invention ;
- La figure 3 représente un exemple de mise en oeuvre des moyens selon l'invention dans le cas où le langage de programmation est OpenGL ;
- La figure 4 représente le schéma de principe d'un dispositif de surveillance par micro-image ;
- La figure 5 représente un exemple de mise en oeuvre des premiers moyens selon l'invention dans le cas où le langage de programmation est OpenGL.

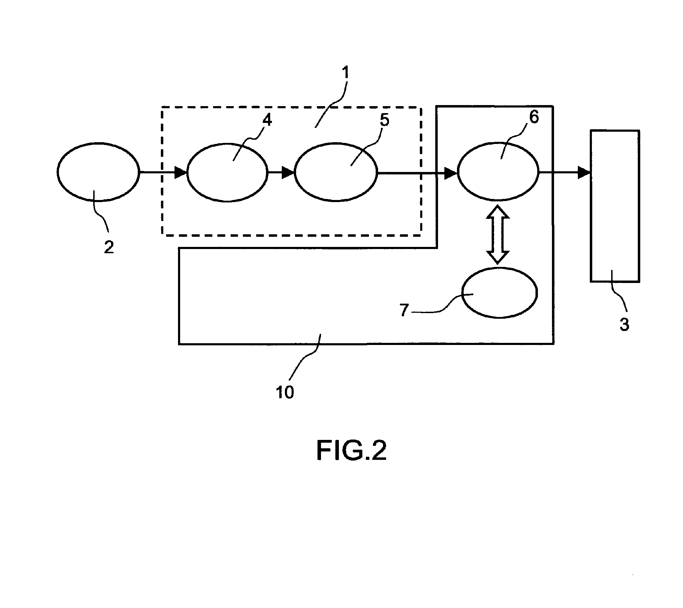

L'invention est plus spécifiquement destinée à être mise en oeuvre pour les dispositifs de génération graphique implantés dans des structures d'accueil informatique. Dans ce type d'architecture illustrée en figure 2, la génération graphique 6 n'appartient plus à une application particulière mais fait partie intégrante de la structure d'accueil 10. Ainsi, on met en oeuvre un mécanisme de surveillance 7 de la génération graphique 6 dans la structure d'accueil elle même. La génération graphique offre une interface générique dite APl, acronyme d'Application Programming Interface avec les applications graphiques par l'intermédiaire d'un langage graphique. Par exemple, le langage graphique peut être le standard dit OpenGL développé par la société Silicon Graphics ou un standard dérivé de ce langage.

Comme il a été dit, afin de ne pas dépendre du type de solution graphique, la surveillance de la génération graphique s'effectue au niveau des fonctions mises en oeuvre par le langage graphique.

A cette fin, les moyens de surveillance comportent, au moins :
- Des premiers moyens permettant d'interdire l'utilisation de certaines fonctions de génération d'éléments de symbologies ;
- Des seconds moyens permettant de générer et de contrôler des micro-images dédiées à la surveillance desdites fonctions.

On appellera également dans la suite de la description ces différents moyens barrières de sécurité.

Concernant les premiers moyens, les principes de définition des règles de programmation sont les suivants :
- Utilisation de fonctions graphiques n'utilisant pas de données récurrentes sur plusieurs cycles de génération d'images ;
- Utilisation de fonctions graphiques de base et interdiction d'utilisation des macro-fonctions mathématiques de haut niveau ;
- Utilisation des fonctions ne nécessitant pas d'allocation dynamique de mémoire ;
- Utilisation de fonctions non récursives.

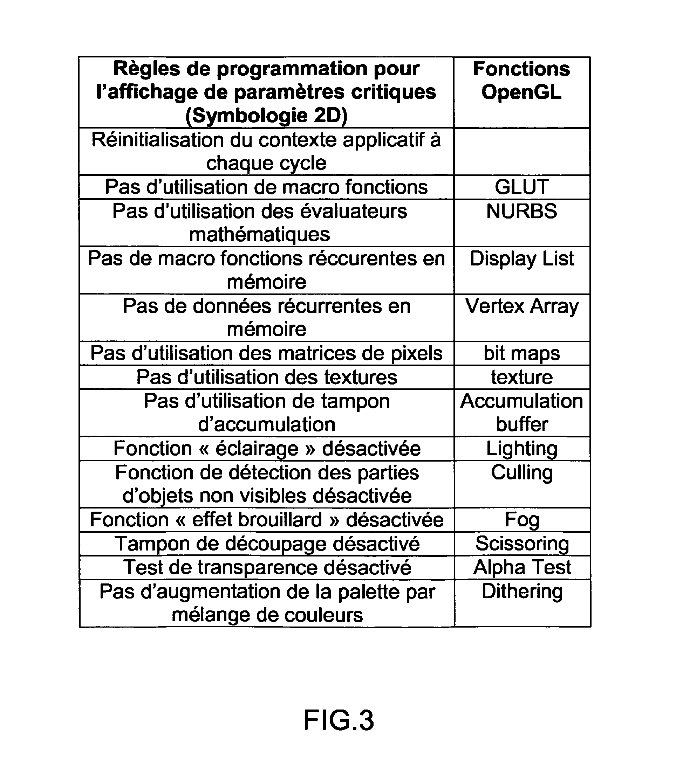

A titre d'exemple non limitatif, une analyse dysfonctionnelle de la machine fonctionnelle OpenGL a permis d'identifier les fonctions critiques pouvant générer une non intégrité des paramètres affichés. La figure 3 est un tableau représentatif de ces fonctions critiques dans le cas d'une application dite 2D où les images sont tracées en 2 dimensions. La colonne de droite donne la terminologie OpenGL des fonctions critiques identifiées et la colonne de gauche les règles de programmation permettant d'inhiber lesdites fonctions.

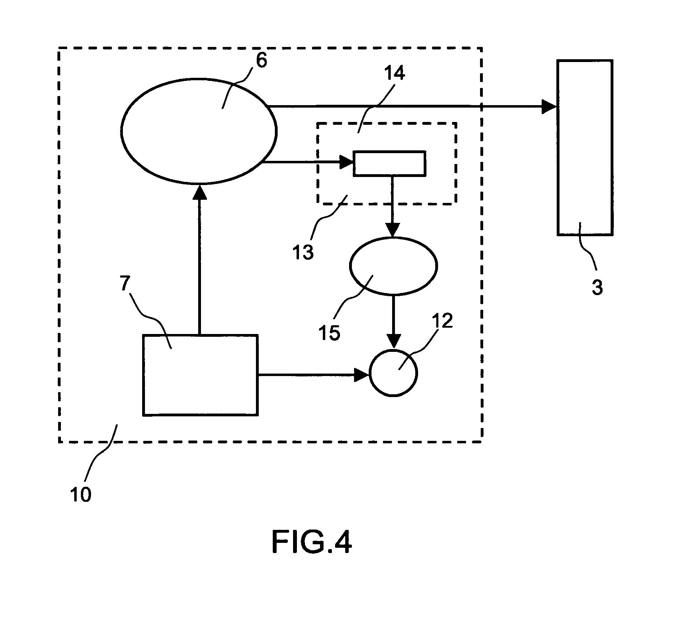

Concernant les seconds moyens, le principe de la surveillance mis en oeuvre consiste à soumettre des micro-images à la génération graphique. Ces micro-images sont caractéristiques du bon fonctionnement des fonctions critiques. Ce principe est représenté en figure 4.

Il existe deux possibilités pour afficher ces micro-images.

Dans une première variante, afin de ne pas perturber l'affichage de l'image opérationnelle, ces micro-images sont calculées par le dispositif de surveillance 7 puis dessinées dans une zone de mémoire 13 correspondant à une partie non visible des tampons de couleurs 14. La structure d'accueil 10 lit ces tampons de couleurs pour générer la vidéo envoyée sur l'écran 3. Lorsque la structure d'accueil lit la partie non visible, elle n'envoie pas ces pixels sur l'écran mais calcule une signature mathématique 15 sur l'ensemble des pixels de la micro-image. II suffit alors de vérifier au moyen du dispositif de comparaison 12 que cette signature est conforme à celle qui était attendue par le dispositif de surveillance 7 pour détecter un éventuel dysfonctionnement de la génération graphique. La fonction mathématique qui permet de déterminer la signature est choisie de façon que toute perturbation dans la micro-image entraîne une modification de la signature. Ce type de fonction est connue de l'homme du métier.

Ces micro-images consistent en un sous-ensemble de tests déroulés pendant la validation de la fonction de génération graphique.

L'avantage principal de cette solution est que les micro-images générées n'interfèrent pas avec l'image finale. Cependant, pour certaines applications, il peut être intéressant de vérifier l'état de l'image finale. Aussi, dans une seconde variante, les micro-images sont tracées dans la partie visible des tampons de couleurs. Afin que la micro image n'apparaisse pas sur l'écran, la séquence suivante est exécutée :
- Tracé de la micro image en mémoire visible ;
- Renvoi des pixels correspondant pour calcul de signature et vérification par rapport à la signature attendue ;
- Effacement de la micro-image ;
- Tracé de l'image opérationnelle.

Dans les deux cas, le mécanisme de surveillance s'exécute sur un coeur de calcul, celui de l'application, différent du coeur de génération graphique. Ceci garantit le principe de ségrégation entre une fonction et sa surveillance.

A ces barrières de sécurité principales, il est également possible d'ajouter d'autres mécanismes de sécurité. En particulier, il est possible de surveiller certaines variables d'états de la chaîne de génération du langage graphique. II s'agit alors de relire, dans le composant graphique, certaines variables d'état susceptibles d'avoir un effet critique sur l'intégrité de fonctionnement. Par exemple, dans le cas du langage OpenGL, les variables d'état à surveiller ont comme dénominations : Matrice de « Model/View », Matrice de projection, Couleur courante.

Dans ce cas, la fonction de surveillance de la génération graphique fait un calcul dissemblable de ces variables d'états permettant de vérifier la cohérence avec les valeurs mises en oeuvre dans le composant graphique. A chaque fois que l'application modifie une de ces variables d'états, elle fait les opérations suivantes :
- Envoi de cette modification à la fonction de surveillance ;
- Exécution d'une instruction de lecture de la variable d'état dans le composant graphique et envoi du résultat à la fonction de surveillance pour comparaison.

Pour que cette surveillance soit générique vis à vis des applications, un générateur de code doit être utilisé qui ajoute automatiquement les traitements ci-dessus dans l'application.

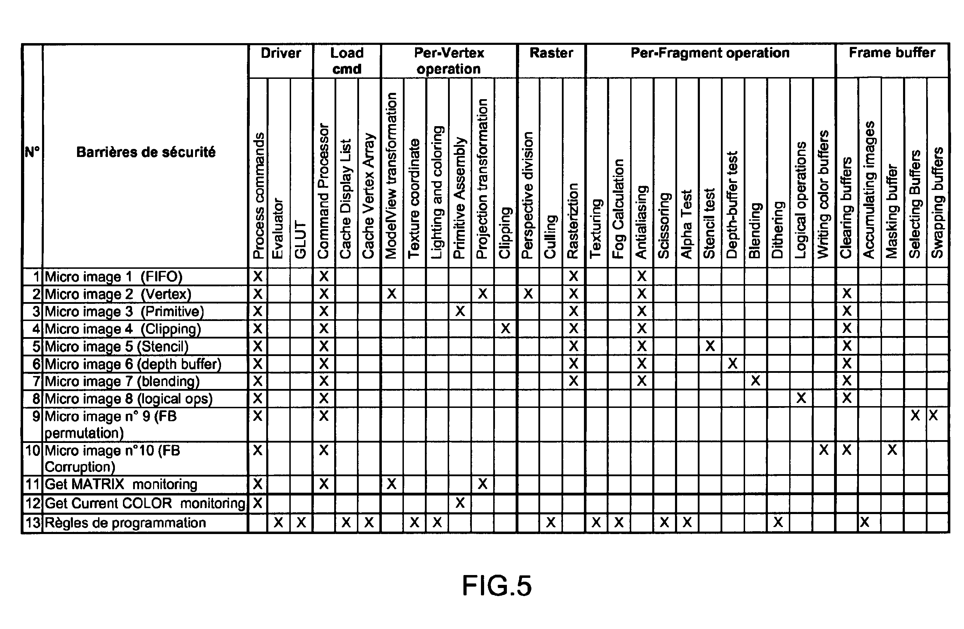

A titre d'exemple non limitatif, le tableau de la figure 5 représente un exemple de mise en oeuvre de l'ensemble des moyens selon l'invention dans le cas où le langage de programmation est OpenGL.

Les principales fonctions de l'automate OpenGL sont regroupées par type et disposées en colonnes. La terminologie utilisée est la terminologie OpenGL. Par exemple, les 3 premières fonctions du tableau notées « Process commands », « Evaluator », « GLUT » sont mises en oeuvre dans la partie « Driver » et sont regroupées dans les trois premières colonnes du tableau. GLUT est l'acronyme de Graphics Langage Utility Toolkit.

Les barrières de sécurité sont regroupées en lignes. Les 10 premières lignes concernent des micro-images, les lignes 11 et 12 concernent la surveillance des variables d'état, la dernière ligne concerne les règles de programmation.

Lorsqu'une barrière de sécurité peut être appliquée à une fonction donnée, une croix est disposée dans le tableau à l'intersection de la ligne et de la colonne correspondant.

Ainsi, il est possible de sécuriser une quarantaine de fonctions OpenGL avec un nombre réduit de barrières de sécurité. De plus, certaines fonctions sont sécurisées de façon redondante.

Ainsi, les dispositifs de surveillance selon l'invention permettent de mettre en oeuvre une chaîne de visualisation de paramètres critiques à haut niveau d'intégrité. Ces dispositifs sont génériques vis à vis du type d'application et portables vis à vis de la technologie de génération graphique utilisée.

Par rapport aux solutions actuelles, ces dispositifs de surveillance limitent les échanges de données dans le système et réduisent la charge de calcul.

De plus, en limitant au maximum les problèmes d'asynchronisme et de tolérance entre chaînes, ces dispositifs permettent une amélioration sensible de la détection d'erreurs.

## Revendications

1. Dispositif de génération graphique de symbologies destinées à un écran de visualisation, ledit dispositif comportant des fonctions de génération d'éléments de symbologies et des moyens de surveillance de son bon fonctionnement, **caractérisé en ce que** les dits moyens de surveillance comportent, au moins :
• Des premiers moyens permettant d'interdire l'utilisation de certaines desdites fonctions de génération d'éléments de symbologies ;
• Des seconds moyens permettant de générer et de contrôler des micro-images dédiées à la surveillance desdites fonctions.

2. Dispositif de génération graphique selon la revendication 1, **caractérisé en ce que** les fonctions interdites sont des fonctions susceptibles de générer des éléments de symboles récurrents.

3. Dispositif de génération graphique selon la revendication 1, **caractérisé en ce que** les fonctions interdites sont des macro-fonctions comprenant une pluralité de fonctions élémentaires de génération d'éléments de symbologies.

4. Dispositif de génération graphique selon la revendication 1, **caractérisé en ce que** le dispositif comporte une mémoire comportant une première zone destinée à la mémorisation de la symbologie et une seconde zone, les micro-images étant générées dans cette seconde zone.

5. Dispositif de génération graphique selon la revendication 1, **caractérisé en ce que** le dispositif comporte une mémoire comportant une première zone destinée à la mémorisation de la symbologie, les seconds moyens de surveillance permettant de générer des micro-images dans cette première zone pendant une durée courte comparée au temps de rafraîchissement de la symbologie sur l'écran de visualisation.

6. Dispositif de génération graphique selon la revendication 1, **caractérisé en ce que** le dispositif comporte, en outre, des troisièmes moyens de surveillance permettant de surveiller certaines variables d'état internes au dispositif de génération graphique.

7. Dispositif de génération graphique selon la revendication 6, **caractérisé en ce que** lesdits troisièmes moyens comportent des moyens de calcul desdites variables d'état internes indépendants de ceux du dispositif de génération graphique.

8. Procédé de surveillance du bon fonctionnement d'un dispositif de génération graphique selon la revendication 5, **caractérisé en ce que** le procédé comporte au moins les étapes suivantes :
• Tracé de la micro-image dans la première zone ;
• Calcul d'une signature mathématique de la dite micro-image ;
• Comparaison de la signature calculée avec une signature attendue ;
• Effacement de la micro-image ;
• Tracé de l'image opérationnelle.

9. Dispositif de génération graphique selon l'une des revendications 1 à 7, **caractérisé en ce que** ledit dispositif est du type GPU, acronyme de Graphics Processing Unit.

10. Dispositif de génération graphique selon l'une des revendications 1 à 7, **caractérisé en ce que** les fonctions de génération graphique et les moyens de surveillance sont intégrés à une structure d'accueil comportant un CPU, acronyme de Central Processing Unit.

11. Dispositif de génération graphique selon l'une des revendications 1 à 7 et 9 à 10, **caractérisé en ce que** les fonctions de génération d'éléments de symbologies sont écrite en langage OpenGL, acronyme de Open Graphics Langage.

12. Dispositif de génération graphique de symbologies destinées à un écran de visualisation selon l'une des revendications 1 à 7 et 9 à 11, **caractérisé en ce que** l'écran de visualisation est du type LCD, acronyme de Liquid Crystal Display.

13. Dispositif de génération graphique de symbologies destinées à un écran de visualisation selon l'une des revendications 1 à 7 et 9 à 12, **caractérisé en ce que** la symbologie est de type aéronautique et représente des symboles utiles au moins pour le pilotage et la navigation aérienne.

## Claims

1. Device for the graphical generation of symbologies intended for a viewing screen, the said device comprising functions for generating symbology elements and means for monitoring proper operation thereof, **characterized in that** the said monitoring means comprise, at least:
• First means making it possible to prohibit the use of some of the said functions for generating symbology elements;
• Second means making it possible to generate and to control micro-images dedicated to the monitoring of the said functions.

2. Graphical generation device according to Claim 1, **characterized in that** the prohibited functions are functions able to generate recurrent symbol elements.

3. Graphical generation device according to Claim 1, **characterized in that** the prohibited functions are macro-functions comprising a plurality of elementary functions for generating symbology elements.

4. Graphical generation device according to Claim 1, **characterized in that** the device comprises a memory comprising a first area intended for storing symbology and a second area, the micro-images being generated in this second area.

5. Graphical generation device according to Claim 1, **characterized in that** the device comprises a memory comprising a first area intended for storing symbology, the second monitoring means making it possible to generate micro-images in this first area for a short duration compared with the refresh time of the symbology on the viewing screen.

6. Graphical generation device according to Claim 1, **characterized in that** the device comprises, furthermore, third monitoring means making it possible to monitor certain state variables internal to the graphical generation device.

7. Graphical generation device according to Claim 6, **characterized in that** the said third means comprise means for calculating the said internal state variables, which means are independent of the means of the graphical generation device.

8. Method for monitoring the proper operation of a graphical generation device according to Claim 5, **characterized in that** the method comprises at least the following steps:
• Tracing the micro-image in the first area;
• Calculating a mathematical signature of the said micro-image;
• Comparing the calculated signature with an expected signature;
• Erasing the micro-image;
• Tracing the operational image.

9. Graphical generation device according to one of Claims 1 to 7, **characterized in that** the said device is of the GPU type, the acronym standing for Graphics Processing Unit.

10. Graphical generation device according to one of Claims 1 to 7, **characterized in that** the graphical generation functions and the monitoring means are integrated into a reception structure comprising a CPU, the acronym standing for Central Processing Unit.

11. Graphical generation device according to one of Claims 1 to 7 and 9 to 10, **characterized in that** the functions for generating symbology elements are written in the OpenGL language, the acronym standing for Open Graphics Language.

12. Device for the graphical generation of symbologies intended for a viewing screen according to one of Claims 1 to 7 and 9 to 11, **characterized in that** the viewing screen is of the LCD type, the acronym standing for Liquid Crystal Display.

13. Device for the graphical generation of symbologies intended for a viewing screen according to one of Claims 1 to 7 and 9 to 12, **characterized in that** the symbology is of aeronautical type and represents useful symbols at least as regards piloting and aerial navigation.

## Patentansprüche

1. Vorrichtung zur graphischen Erzeugung von Symbologien, die für einen Anzeigebildschirm bestimmt sind, wobei die Vorrichtung Funktionen der Erzeugung von Symbologie-Elementen und Überwachungseinrichtungen ihres einwandfreien Betriebs aufweist, **dadurch gekennzeichnet, dass** die Überwachungseinrichtungen mindestens aufweisen:
• erste Einrichtungen, die es ermöglichen, die Verwendung bestimmter der Funktionen zur Erzeugung von Symbologie-Elementen zur verbieten;
• zweite Einrichtungen, die es ermöglichen, für die Überwachung der Funktionen spezifische Mikrobilder zu erzeugen und zu kontrollieren.

2. Vorrichtung zur graphischen Erzeugung nach Anspruch 1, **dadurch gekennzeichnet, dass** die verbotenen Funktionen Funktionen sind, die rekurrente Symbol-Elemente erzeugen können.

3. Vorrichtung zur graphischen Erzeugung nach Anspruch 1, **dadurch gekennzeichnet, dass** die verbotenen Funktionen Makrofunktionen sind, die mehrere Elementarfunktionen der Erzeugung von Symbologie-Elementen enthalten.

4. Vorrichtung zur graphischen Erzeugung nach Anspruch 1, **dadurch gekennzeichnet, dass** die Vorrichtung einen Speicher aufweist, der eine erste Zone, die zur Speicherung der Symbologie bestimmt ist, und eine zweite Zone aufweist, wobei die Mikrobilder in dieser zweiten Zone erzeugt werden.

5. Vorrichtung zur graphischen Erzeugung nach Anspruch 1, **dadurch gekennzeichnet, dass** die Vorrichtung einen Speicher aufweist, der eine erste Zone aufweist, die zur Speicherung der Symbologie bestimmt ist, wobei die zweiten Überwachungseinrichtungen es ermöglichen, Mikrobilder in dieser ersten Zone während einer Dauer zu erzeugen, die im Vergleich mit der Auffrischungszeit der Symbologie auf dem Anzeigebildschirm kurz ist.

6. Vorrichtung zur graphischen Erzeugung nach Anspruch 1, **dadurch gekennzeichnet, dass** die Vorrichtung außerdem dritte Überwachungseinrichtungen aufweist, die es ermöglichen, bestimmte Zustandsvariable innerhalb der Vorrichtung zur graphischen Erzeugung zu überwachen.

7. Vorrichtung zur graphischen Erzeugung nach Anspruch 6, **dadurch gekennzeichnet, dass** die dritten Einrichtungen Einrichtungen zur Berechnung der inneren Zustandsvariablen unabhängig von denjenigen der Vorrichtung zur graphischen Erzeugung aufweisen.

8. Verfahren zur Überwachung des einwandfreien Betriebs einer Vorrichtung zur graphischen Erzeugung nach Anspruch 5, **dadurch gekennzeichnet, dass** das Verfahren mindestens die folgenden Schritte aufweist:
• Verlauf des Mikrobilds in der ersten Zone;
• Berechnung einer mathematischen Signatur des Mikrobilds;
• Vergleich der berechneten Signatur mit einer erwarteten Signatur;
• Löschen des Mikrobilds;
• Verlauf des funktionsfähigen Bilds.

9. Vorrichtung zur graphischen Erzeugung nach einem der Ansprüche 1 bis 7, **dadurch gekennzeichnet, dass** die Vorrichtung vom Typ GPU, Akronym für Graphics Processing Unit, ist.

10. Vorrichtung zur graphischen Erzeugung nach einem der Ansprüche 1 bis 7, **dadurch gekennzeichnet, dass** die Funktionen der graphischen Erzeugung und die Überwachungseinrichtungen in eine Empfangsstruktur integriert sind, die eine CPU, Akronym für Central Processing Unit, aufweist.

11. Vorrichtung zur graphischen Erzeugung nach einem der Ansprüche 1 bis 7 und 9 bis 10, **dadurch gekennzeichnet, dass** die Funktionen der Erzeugung von Symbologie-Elementen in der Programmiersprache OpenGL, Akronym für Open Graphics Language, geschrieben werden.

12. Vorrichtung zur graphischen Erzeugung von Symbologien, die für einen Anzeigebildschirm bestimmt sind, nach einem der Ansprüche 1 bis 7 und 9 bis 11, **dadurch gekennzeichnet, dass** der Anzeigebildschirm vom Typ LCD, Akronym für Liquid Crystal Display, ist.

13. Vorrichtung zur graphischen Erzeugung von Symbologien, die für einen Anzeigebildschirm bestimmt sind, nach einem der Ansprüche 1 bis 7 und 9 bis 12, **dadurch gekennzeichnet, dass** die Symbologie vom flugtechnischen Typ ist und Symbole darstellt, die zumindest für die Steuerung und für die Luftnavigation nützlich sind.
